## Europäisches Patentamt

## European Patent Office

## Office européen des brevets

(19)

(11) Veröffentlichungsnummer: **0 167 142**
**B1**

(12)

# EUROPÄISCHE PATENTSCHRIFT

(45) Veröffentlichungstag der Patentschrift:
08.02.89

(51) Int. Cl.⁴: **G 11 B 23/087**

(21) Anmeldenummer: 85108154.7

(22) Anmeldetag: 01.07.85

(54) **Brems- und Bandspannvorrichtung für Bandkassetten mit Flanschspulen und Bandkassette, insbesondere Magnetbandkassette, damit.**

(30) Priorität: 06.07.84 DE 8420207 U

(43) Veröffentlichungstag der Anmeldung:
08.01.86 Patentblatt 86/2

(45) Bekanntmachung des Hinweises auf die Patenterteilung:
08.02.89 Patentblatt 89/6

(84) Benannte Vertragsstaaten:
CH DE FR GB LI NL

(56) Entgegenhaltungen:
GB-A- 2 019 356
GB-A- 2 020 628
GB-A- 2 044 733
GB-A- 2 099 400
GB-A- 2 131 769
GB-A- 2 137 591

PATENT ABSTRACTS OF JAPAN, Band 7, Nr. 152
(P-208)[1297], 5. Juli 1983; & JP - A - 58 62878

(73) Patentinhaber: **BASF Aktiengesellschaft,
Carl-Bosch-Strasse 38, D-6700 Ludwigshafen (DE)**

(72) Erfinder: **Schoettle, Klaus, Bergstrasse 115,
D-6900 Heidelberg (DE)**
Erfinder: **Schmidts, Kurt, Kornstrasse 10, D-7640 Kehl
(DE)**
Erfinder: **Kamm, Eugen, Am Sonnenhang 20,
D-7604 Appenweier (DE)**
Erfinder: **Berger, Heinz, Im Loehl 9, D-7640 Kehl (DE)**

ACTORUM AG

## Beschreibung

Die Erfindung betrifft eine Brems- und Bandspannvorrichtung für Bandkassetten mit einem Gehäuse und darin enthaltenen Flanschspulen, wobei zumindest ein Flansch am Umfangsrand eine Verzahnung trägt und ein Federelement in Bremslage jedoch nicht in Freigabelage mit der Verzahnung zusammenwirkt, wobei ein in das Gehäuse eintretendes geräteseitiges Betätigungselement das Federelement von seiner Bremslage in seine Freigabelage überführt und kassettenseitige Positionierelemente die Führung jedes Federelements von der Bremslage in die Freigabelage und bewirken, sowie eine Bandkassette, insbesondere eine Magnetbandkassette, mit einer solchen Brems- und Bandspannvorrichtung.

In den DE-OS 29 18 271, 32 17 128 und 29 10 783 sind Spulenbremsen für die handelsüblichen Kassetten der bekannten Videosysteme beschrieben. Diese Spulenbremsen bestehen aus federnd gelagerten Schwenkhebeln, die in entsprechende Rechteck-Verzahnungen der Flanschumfangsränder eingreifen und damit die Spulen gegen unbeabsichtigtes Bandabwickeln bei Handhabung oder Transport der Kassette sichern.

Mit der DE-OS 30 07 948 ist eine Videokassette mit einem Bremssystem beschrieben, das im wesentlichen aus einem von ausserhalb der Kassette betätigbaren Hebelträger, mit je einem daran für jede Spule verschwenkbar angelenkten Bremshebel besteht, wobei letzterer so mit einer Steuerfläche an der Rückwand der Kassette zusammenwirkt, dass die Bremshebel schon bei einem kurzem Hub des Hebelträgers in Eingriff mit der Verzahnung der Spulenflansche kommen und im Resthub des Hebelträgers über eine gegenläufige Drehung der Spulen eine eventuell vorhandene Bandlose in der Kassettenfront beseitigen. Dieses Bremssystem erfüllt beide Forderungen, die Beseitigung einer losen Bandschleife und das Sperren der Spulen gegen unbeabsichtigtes Aufdrehen der Bandspulen, z.B. während des Transports. Wegen seines relativ grossen Platzbedarfs und relativ komplizierten Aufbaus (4 Teile: 1 Hebelträger, 2 gelagerte Bremshebel, 1 Bremsfeder) ist es für wirtschaftlich herzustellende Kassetten und besonders für miniaturisierte Kassetten, wie z.B. die 8 mm-Videokassette nicht geeignet. In der Spezifikation für die letztgenannte 8 mm-Videokassette wurde daher folgendes Bremssystem vorgeschlagen.

An einem von aussen verschiebbaren Grundkörper aus Kunststoff sind für die zwei Flanschverzahnungen zwei blattfederartige Federn angebracht, so dass jede Einzel-Blattfeder jeweils einer Spule zugeordnet ist. In ausgerückter Stellung wird jede dieser Federn durch gehäuseseitige Vorsprünge, so zur die Mittelachse der Kassette hin ausgelenkt, dass die Federspitzen ausserhalb der jeweiligen Flanschverzahnung liegen. Wird die Bremse zur Arretierung der Spulen in Richtung der Spulen verschoben, so werden im ersten Teil des Hubs die Federn durch die stationären Gehäusevorsprünge freigegeben, so dass sie, sich entspannend, zur Flanschverzahnung hin bewegen und damit in Eingriff kommen. Eine Untersuchung hat gezeigt, dass mit dieser Ausführung bei einer Zahnteilung von 1,2 mm von einer vorhandenen Bandlose längs der Kassettenfront nur ca. 0,6 mm eingezogen werden können. Beträgt die Zahnteilung 0,7 mm, was praktisch der spritztechnischen und funktionsmässigen untersten, noch realisierbaren Grenze entspricht, so wird der effektive Bandeinzug nur auf 1,2 mm gesteigert. (Die Zahlenwerte des Bandeinzugs sind ohne Bezugs-Bandlose angegeben, da derzeit kaum Geräte für das 8 mm-System zur Ermittlung einer durchschnittlichen Bandlose zur Verfügung stehen.) Das reicht für einen sicheren Betrieb einer Kassette nicht aus, da besonders bei der speziellen Konstruktion einiger Kassetten mit «doppelter» Kassettenfrontklappe die Gefahr besteht, dass das Band beim Schliessen der Frontklappe schon bei einer kleinen Bandlose zwischen der eigentlichen Frontklappe und der dahinter angeordneten Staubschutzklappe eingeklemmt und verknittert wird. (Die oben angegebenen Zahlenwerte beziehen sich auf die 8 mm-Videokasette.)

Der Erfindung liegt die Aufgabe zugrunde, wirkungsvolle Flanschspulenbremsen für und Bandkassetten, insbesondere Magnetbandkassetten, damit, bereitzustellen, die einfach herstellbar sind und mittels der eine Bandlose weitestgehend beseitigbar ist.

Erfindungsgemäss wird die Aufgabe mit einer Brems- und Bandspannvorrichtung bzw. mit einer Bandkassette gemäss Patentanspruch 1 bzw. 16 vorteilhaft gelöst. Vorteile die mittels der Merkmale der Patentansprüche 1 und 16 und der davon abhängigen Patentansprüche erreichbar sind, bestehen in:

a) Einfache und wirtschaftliche Herstellbarkeit und Montierbarkeit der Vorrichtung und der Bandkassette.

b) Funktionssicherheit und Zuverlässigkeit der Vorrichtung und der Kassette.

c) Variationsmöglichkeit der Bandeinzugswirkung durch Verwendung unterschiedlicher Anzahlen von Rastelementen.

d) Variationsmöglichkeit der Bremskräfte durch Verwendung unterschiedlicher Anzahlen von Rastelementen und Federelementen.

e) Verkleinerungsmöglichkeit der Vorrichtung und der Bandkassette bei unveränderter Funktionssicherheit und Zuverlässigkeit.

Einzelheiten von Ausführungsbeispielen der Erfindung sind in der Zeichnung dargestellt und nachfolgend beschrieben. Die Figuren zeigen:

Fig. 1 eine 8 mm-Videokassette in Draufsicht mit zwei Spulen mit gegenläufiger Verzahnung und einem Bremskörper, links in ausgerasteter und rechts in eingerasteter Stellung.

Fig. 2 eine erfindungsgemässe Spulenbremse mit drei angespitzten Rastelementen je Spule.

Fig. 3 wie Fig. 2 mit zwei Rastelementen je Spule.

Fig. 4, 5 und 6 andere erfindungsgemässe Spulenbremsen mit 3 bzw. 2 Bremsrastelementen pro Spule.

Eine Bandkassette, z.B. eine 8 mm-Videokassette, besteht aus dem Gehäuse 1, der Frontklappe 2 und der Staubschutzklappe 3, zwischen welchen das Band 4 mittels der gehäuseseitigen Führungen 17 a/b bei nicht im Gerät eingefädeltem Zustand gehalten wird, sowie den Spulen 5 und 6 mit Spulennaben 13. Der Bewegungsablauf der Frontklappe 2 und der Staubschutzklappe 3 ist z.B. in der GB-OS Nr. 21 15 782 A beschrieben. Funktionsmässig muss das Band 4 an der Frontseite der Kassette innerhalb enger Toleranzen gespannt gehalten werden, da sonst die Klappenenden beim Schliessen das Band 4 ergreifen, verknittern und/oder aus der normalen Lage auslenken.

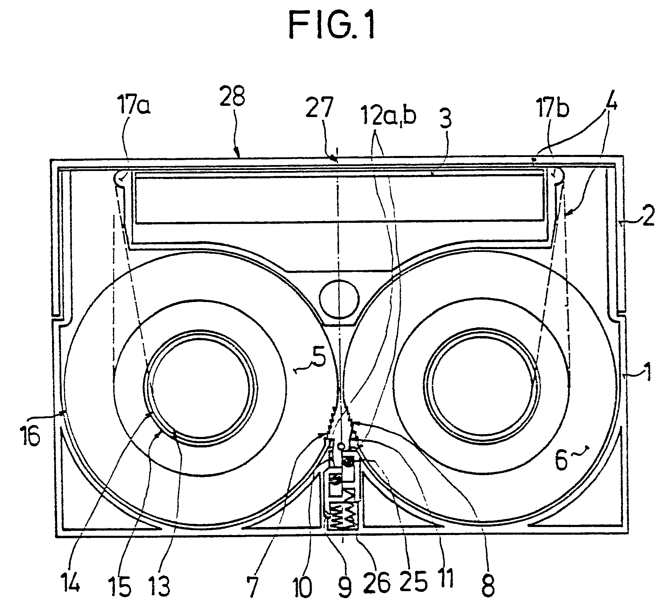

Das Bremssystem besteht aus einem über einen von aussen eintretenden Betätigungsstift 25 verschiebbaren Bremsgrundkörper 9, der von einer zwischen Gehäuse 1 und Grundkörper angebrachten Druckfeder 26 in Richtung auf die Spulen 5 und 6 unter Druckspannung gehalten wird. Am Grundkörper 9, der üblicherweise aus Kunststoff besteht, sind vorn zwei blattfederartige, üblicherweise V-förmig angespitzte Federn 10 und 11 vorgesehen, die jede jeweils einer Spule 5 bzw. 6 zugeordnet sind. Zur Mittelquerachse 27 der Kassette sind die Federn 10 und 11 im Winkel in Richtung zur jeweils zugeordneten Spule angeordnet zum besseren Eingriff. Jeweils ein Spulenflansch ist bekannterweise mit einer Aussenrand-Verzahnung, in Figur 1 mit einer Sägezahn-Verzahnung, versehen. Die Art der Flanschverzahnung spielt für die vorliegende Erfindung nur insofern eine Rolle als die Eingriffsflanke vorteilhafterweise radial gerichtet sein sollte.

Beim Bremsvorgang, welcher sich automatisch vollzieht, wenn die Kassette dem Gerät entnommen wird, werden die Spulen 5 und 6 nach einem kurzen Leerhub A des Bremskörpers 9 in Richtung zur Kassettenfront 28 mit den Spitzen der federnden Rastelemente 10 und 11 mit den Zähnen 7 und 8 der Flanschverzahnung der Spulen 5 und 6 in Eingriff gebracht. Im ungünstigen Fall treffen die Rastelemente 10 und 11 gerade nicht die Zahnflanken, so dass vor dem effektiven Eingriff von Zahnflanken und Rastelement erst noch der zusätzliche Hub B erfolgen muss. Bei herkömmlichen Bremsen mit einem einzigen Rastelement je Spule entspricht B ungefähr einer Zahnteilung der Verzahnung. Nur de verbleibende Hub C kann die Spulen innerhalb der Toleranz zwischen dem Lagerrand 14 der Spule 5 und der Gehäuseöffnung 15 zur Seite auslenken und eine eventuelle Bandlose des Bandabschnitts zwischen den Führungen 17a und 17b an der Frontklappe 3 nach innen, mitteils einer gegenläufigen Drehbewegung der Spulen 5 und 6, einziehen.

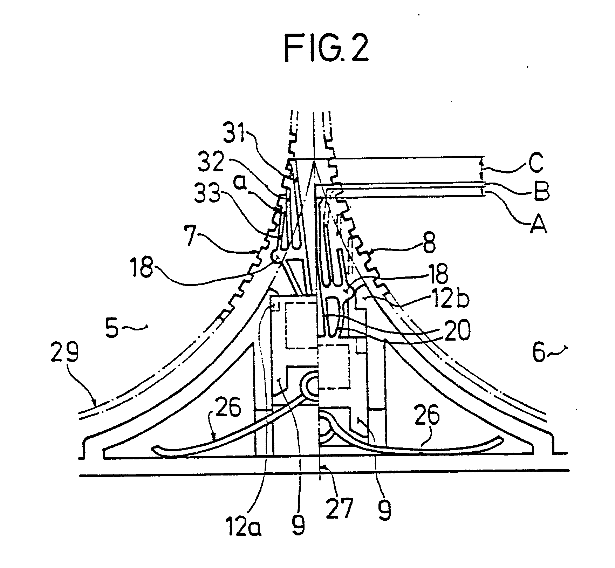

In Freigabelage der Spulen 5 und 6 werden die Rastelemente 10/11 durch Auslenkung (s. Rastelement 10 in Fig. 1, linke Seite) durch gehäuseseitige Anschläge 12a/b zur Mittelquerachse 27 hin gedrückt, so dass die Spitzen der Rastelemente (z.B. 31 und 32 in Figur 2) aus dem Wirkungsbereich der Spulen 5 und 6 entfernt sind.

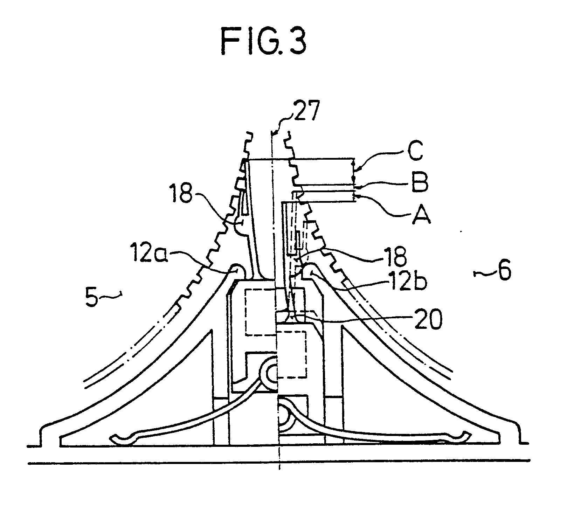

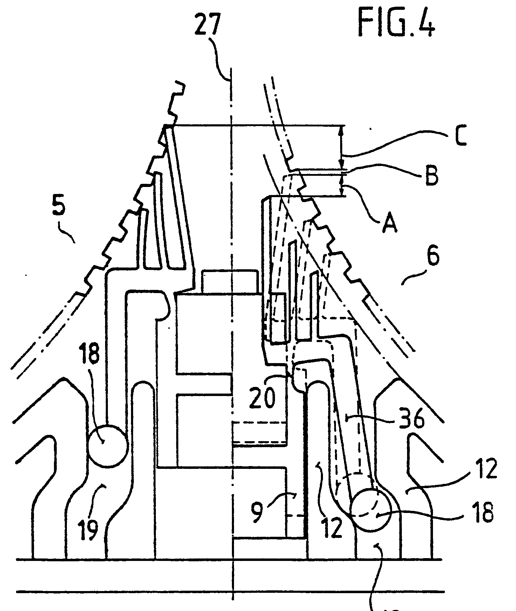

Fig. 3 und 4 zeigen erfindungsgemässe Bremsen mit drei Rastelementen 31 bis 33 pro Spule in verschiedener Ausgestaltung. Fig. 3, 5 und 6 zeigen weitere Ausgestaltungen der erfindungsgemässen Bremse mit zwei Rastelementen 34 und 35 pro Spule. Bei allen erfindungsgemässen Bremsen sind Spulen mit Trapez- oder Rechteck-Verzahnung am Umfangsrand dargestellt, so dass linke und rechte Spule 5 bzw. 6 völlig identisch ausgeführt werden können. Selbstverständlich sind mit der erfindungsgemässen Brems- und Spannvorrichtung grundsätzlich auch Spulen mit jeder anderen, auch unsymmetrischen Verzahnung kombinierbar.

In den Figuren 2 bis 6 ist die Bremse jeweils auf der rechten Seite der Mittelquerachse 27, ausgezogen in der Freigabelage und gestrichelt in der Bremslage nach dem Leerhub A, gezeichnet bei dem die Spitzen der Rastelemente bei zentraler Lage der Spulen 5 und 6 gerade mit der Flanschverzahnung 29 in Berührung kommen. Dabei ist jeweils der ungünstigste Fall dargestellt, bei dem kein Rastelement 31–33 direkt in irgendeine Zahnflanke 8 eingreift und ein Rastelement 33 (dargestellt die unterste) die in Bewegungsrichtung nächstliegende Zahnflanke (s. Pfeil a) ganz knapp verfehlt.

Der Abstand zwischen dem obersten Rastelement 31 und der nächsten Zahnflanke entspricht somit dem maximalen zusätzlichen Hub B bis der Eingriff des untersten Elements erfolgt. Der restliche Hub C wird, wie links in Figur 2 in Endlage dargestellt, in seitliche Verschiebung und/oder Drehung der Spule 5 umgesetzt. Dabei ist die Spule 5 in den Fig. 2 bis 6 jeweils in der äussersten oberen, unter 45° von der Kassettenmitte ausgelenkten Stellung gezeichnet.

Die Längendifferenz jeder der drei Rastelemente 31–33 untereinander oder der gegenseitige Abstand der Spitzen der Rastelemente 31–33 untereinander ist in der (meist unbelasteten) Stellung nach dem Hub A von der Zahnteilung t der Verzahnung 29 verschieden zu wählen. Vorteilhaft beträgt die Längendifferenz etwa

$$X_{1-2} = t \, (n + 1/2)$$

für die Längendifferenz der ersten zur zweiten Rastspitze,

$$X_{1-3} = t \, (n + \underbrace{1/2 + 1/4}_{3/4})$$

und für die Längendifferenz der ersten zur dritten Rastspitze

$$X_{1-4} = t \, (n + \underbrace{1/2 + 1/4 + 1/8}_{7/8})$$

für die Längendifferenz der ersten zur vierten Rastspitze. n bedeutet n = 0, 1, 2, 3, 4. Offensichtlich setzt sich der zweite Klammerfaktor in Form einer geometrischen Reihe fort.

Die erfindungsgemäss vorgesehene Mehrzahl von Rastelementen 31–35 und deren Längendifferenzen führen vorteilhaft zu einem schnelleren Eingriff der Bremsvorrichtung in die Verzahnung und zu einer besseren Bandspannung wie im folgenden dargelegt wird.

Die folgende Tabelle zeigt, dass sich beim Beispiel der 8 mm-Kassette bei gleicher Zahnteilung t der effektive, minimale Bandeinzug durch die erfindungsgemässe Bremsvorrichtung ca. um den Faktor 4 steigern lässt.

Diesen Vergleichsversuchen gegenüber dem bekannten Bremssystem mit einem Rastelement liegen folgende Kassettenmasse zugrunde:

| | |
|---|---|
| Aussendurchmesser Spulenflansch | 45,1 mm |
| Max. Bandwickeldurchmesser | 43,2 mm |
| Nabendurchmesser 13 | 16,0 mm |
| Spulenlagerranddurchmesser 14 | 17,9 mm |
| Gehäuseöffnung 15 | 18,85 mm |
| Bremsenhub gesamt | 2,75 mm |

| Bremsen Typ Teilungs-Spule | Zahl der Brems-arme | Bremsweg in % vom Gesamthub von 2,75 mm | | | Effektive Spulen-drehung ∢°/je Spule | Effektiver Bandeinzug an Kass.-Front (min) mm |
|---|---|---|---|---|---|---|
| | | A (min) | B (max) | C (min) | | |
| **Stand der Technik** | | | | | | |
| Standard 1.2 mm (Fig. 1) | 1 | 44% | 38,5% | 17,5% | 1,2° | 0,6 |
| Standard 0,7 mm (Fig. 1) | 1 | 44% | 22% | 34% | 2,3° | 1,2 |
| **Erfindung** | | | | | | |
| Typ Fig. 4 1,2 mm | 3 | 22,2% | 9,6% | 68,2% | 4,2° | 2,2 |
| Typ Fig. 2 1,2 mm | 3 | 32,2% | 7,4% | 60,4% | 4,7° | 2,4 |
| Typ Fig. 6 1,2 mm | 2 | 25,8% | 12% | 62% | 4,3° | 2,2 |
| Typ Fig. 3 1,2 mm | 2 | 25,6% | 12% | 62,4% | 4,4° | 2,3 |
| Typ Fig. 5 1,2 mm | 2 | 14,3% | 13,4% | 72,3% | 5,0° | 2,6 |

Wie die Tabelle zeigt, wird durch die Zahl der Rastelemente im wesentlichen der Hub B beeinflusst. Hub A ist konstruktiv bestimmt und ist die zweite, die Effektivität des Bandeinzugs bestimmende Grösse. Hub A ist davon abhängig, wie schnell die Spitzen der Rastelemente beim Vorwärtsbewegen der Bremsvorrichtung mit den Zähnen 8 der Flansche in Berührung kommen.

Um den Hub A möglichst kurz zu halten, ist das jeweilige Federelement, das erfindungsgemäss aus Rastelementen 31–35 und Federkörpern 20 besteht, zweckmässig mit nockenartigen Fortsätzen oder Verdickungen 18 versehen, die mit den stationären Gehäusevorsprüngen 12a und b zusammenwirken. Im Zuge der Bewegung der Bremsvorrichtung kommen die Verdickungen mit den Gehäusevorsprüngen 12a und b in Kontakt und rutschen darüber hinweg, so dass die Rastelemente 31–35 entweder zur Mittelquerachse 27 hin (Freigabelage) oder davon fort (Bremslage) gebogen werden. Sind die Vorsprünge und Verdickungen auf der anderen Seite des jeweiligen Federelements angeordnet, ergibt sich die entsprechende Funktion.

Die Fortsätze oder Verdickungen 18 sind vorzugsweise so ausgeführt dass beim Spritzgiessen zum Entformen ein Ausstosser an diesen Stellen angreifen kann.

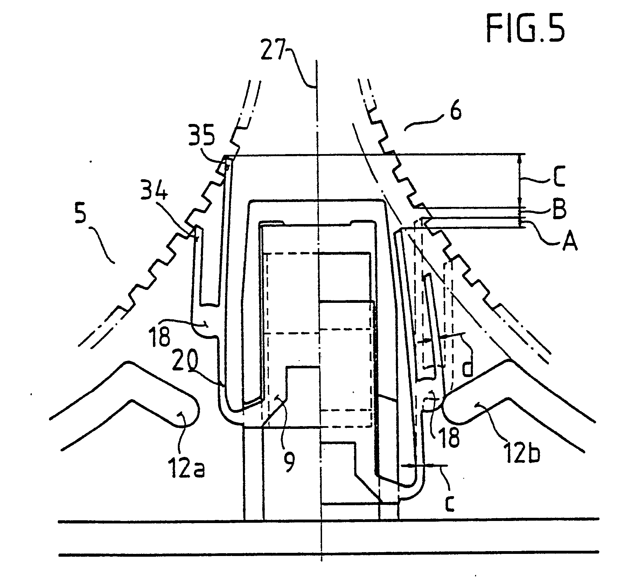

Anhand von Figur 5 wird der prinzipielle Aufbau des Federelementes noch einmal erläutert.

Vom Grundkörper 9 ausgehend ist ein Federkörper 20 vorgesehen, der mit einer Verdickung 18 ausgebildet ist. An die Verdickung 18 schliessen sich die ebenfalls federnden Rastelemente 34 und 35 an. Die Federcharakteristik sollte dabei so eingestellt werden, dass die Federkonstante des Federkörpers immer grösser ist als die Federkonstante eines Rastelements 34 oder 35, vorzugsweise durch Einstellung einer grösseren Dicke ($c \sim 1,5$, d, bei d = Dicke des Rastelements und c = Dicke des Federstegs) des Federkörpers 20. Letzterer verleiht den Rastelementen 34 und 35 gemeinsam gegebenenfalls eine grössere Beweglichkeit. Verschiedene Federkörper 18 zeigen Figur 2, 4 und 5, wobei erst eine doppelte Federsteg-Ausführung, dann eine einfache kurze Federsteg-Ausbildung und schliesslich eine einfache lange Federstegversion dargestellt sind.

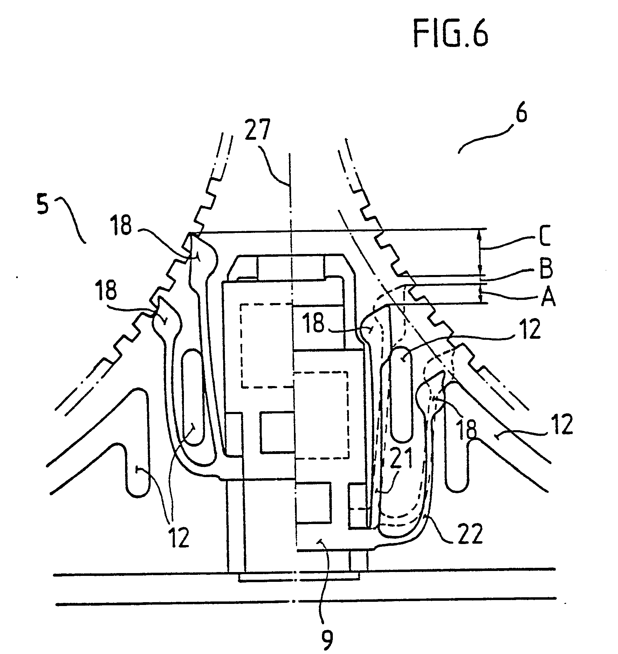

Im Beispiel der Figur 6 sind längere federnde Rastelemente 21 und 22 ohne spezielle Federstege 20 direkt am Grundkörper 9 angeformt. Besonders ist hierbei die Form der «Entenkopf»-artigen Ausbildung der Verdickungen 18 an der Spitze der Rastelemente 21 und 22 gewählt, um einen zusätzlichen Nocken usw. einsparen zu können. Die Spitzen der Entenköpfe gelangen dabei in die Zahnlücken zum Bremsen. In dieser Ausführung sind Gehäusevorsprünge 12 auch zwischen den Rastelementen 21 und 22 vorgesehen.

Eine weitere Besonderheit ist in Figur 4 erkennbar, da dort die Rastelemente 31–33 über einen Auslegerarm 36 mit einer Verdickung 18 verbunden sind. Zwischen dem Grundkörper 9 und dem Ausleger 36 ist auch hier ein Gehäusevorsprung 12 vorgesehen. In weiterer Ausbildung könnte der Auslegerarm 36 mit den Rastelementen 31–33 auch drehbar gelagert sein.

Aus Gründen einer klareren Darstellung wurden funktionell gleiche Teile mit gleichen Bezugszeichen versehen.

Die Ausbildung der Rastelemente 31–35 und 21, 22 ist beliebig nach Form und Federkraft variierbar, solange die angestrebten Wirkungen erhalten bleiben. Als günstigste Herstellung ergibt sich der Spritzguss. Als Werkstoff kann jeder zum Spritzgiessen geeignete Kunststoff verwendet werden, z.B. POM (Polyoxymethylen).

## Patentansprüche

1. Brems- und Bandspannvorrichtung für Bandkassetten mit einem Gehäuse (1) und darin enthaltenen Flanschspulen (5 und 6), wobei zumindest ein Flansch am Umfangsrand eine Verzahnung (29) trägt und ein Federelement in Bremslage, jedoch nicht in Freigabelage, mit der Verzahnung zusammenwirkt und wobei ein in das Gehäuse (1) eintretendes geräteseitiges Betätigungselement (25) das Federelement von seiner Bremslage in seine Freigabelage überführt und kassettenseitige Positionierelemente (12) die Führung jedes Federelements von der Bremslage in die Freigabelage und umgekehrt bewirken, dadurch gekennzeichnet, dass das Federelement mindestens zwei Rastelemente (31–35, 21, 22) mit, bezogen auf den Umfangsrand des Verzahnungsflansches, unterschiedlicher Länge umfasst, wobei der Abstand X der Rastspitzen der Rastelemente vom Teilungsabstand t der Zähne (8) der Verzahnung (29) des Verzahnungsflansches verschieden ist.

2. Vorrichtung nach Anspruch 1, dadurch gekennzeichnet, dass drei oder vier Rastelemente (31–36) vorgesehen sind.

3. Vorrichtung nach Anspruch 1, dadurch gekennzeichnet, dass der Abstand X zwischen der ersten und zweiten Rastspitze durch die Beziehung

$$X = t \left(n + \frac{1}{2}\right)$$

bestimmt ist, wobei t die Zahnteilung und n eine ganze Zahl $n = 0, 1, 2, 3$ usw. bedeuten.

4. Vorrichtung nach Anspruch 2, dadurch gekennzeichnet, dass der Abstand $X_{1-3}$ zwischen der ersten und dritten Rastspitze durch die Beziehung

$$X_{1-3} = t \left(n + \frac{3}{4}\right)$$

bestimmt ist, wobei t die Zahnteilung und n eine ganze Zahl $n = 0, 1, 2, 3$ usw. bedeuten.

5. Vorrichtung nach Anspruch 2, dadurch gekennzeichnet, dass der Abstand X zwischen der ersten und vierten Rastspitze durch die Beziehung

$$X_{1-4} = t \left(n + \frac{7}{8}\right)$$

bestimmt ist, wobei t die Zahnteilung und n eine ganze Zahl $n = 0, 1, 2, 3$ usw. bedeuten.

6. Vorrichtung nach Ansprüchen 1, 2 und 4, gekennzeichnet durch einen Bremskörper (9), mindestens einen damit verbundenen Federkörper (20) als Federelement und daran angebrachte mindestens zwei, vorzugsweise federnde Rastelemente (31–36, 21, 22).

7. Vorrichtung nach Anspruch 6, dadurch gekennzeichnet, dass am Bremskörper (9) mindestens ein stimmgabelförmiger Federkörper mit zwei Rastelementen (34 und 35) mit unterschiedlicher Gabelzinkenlänge vorgesehen ist.

8. Vorrichtung nach Ansprüchen 1, 2 und 4, dadurch gekennzeichnet, dass zwei Federkörper (20) und drei damit verbundene unterschiedlich lange Rastelemente (31–34) vorgesehen sind.

9. Vorrichtung nach Ansprüchen 1, 2, 4 und 6, dadurch gekennzeichnet, dass die Rastelemente (21, 22) mit umgekehrt tropfenförmigen Körpern (18) an Stielen als Federkörper (20) ausgebildet sind.

10. Vorrichtung nach Ansprüchen 1 bis 9, dadurch gekennzeichnet, dass die Federelemente mit mindestens einer Verdickung (18) ausgebildet sind, die mit kassettenseitigen Gehäusevorsprüngen (12a und b) zusammenwirken.

11. Vorrichtung nach Anspruch 10, dadurch gekennzeichnet, dass die Verdickung (18) zwischen dem Federkörper (20) und den Rastelementen (31–35) vorgesehen ist.

12. Vorrichtung nach Anspruch 10, dadurch gekennzeichnet, dass die Verdickung (18) unmittelbar an den Rastelementen (21, 22) vorgesehen ist.

13. Vorrichtung nach Anspruch 10, dadurch gekennzeichnet, dass die Verdickung (18) an einem zusätzlichen Stützarm (36) vorgesehen ist.

14. Vorrichtung nach Ansprüchen 10, 11 und 13, dadurch gekennzeichnet, dass die kassettenseitigen Gehäusevorsprünge in Funktionslage seitlich bezogen auf die Federelemente angeordnet sind.

15. Vorrichtung nach Ansprüchen 10 und 12, dadurch gekennzeichnet, dass die kassettenseitigen Gehäusevorsprünge in Funktionslage seitlich und zwischen den Rastelementen (31–36 u. 21, 22) angeordnet sind.

16. Bandkassette, insbesondere Magnetbandkassette mit einem Gehäuse (1) und darin enthaltenen Flanschspulen (5, 6) und einer Brems- und Bandspannvorrichtung, wobei zumindest ein Flansch am Umfangsrand eine Verzahnung (29) trägt und ein Federelement in Bremslage, jedoch nicht in Freigabelage, mit der Verzahnung zusammenwirkt und wobei ein in das Gehäuse (1) eintretendes geräteseitiges Betätigungselement (25) das Federelement von seiner Bremslage in seine Freigabelage überführt und kassettenseitige Positionierelemente (12) die Führung jedes Federelements von der Bremslage in die Freigabelage und umgekehrt bewirken, dadurch gekennzeichnet, dass das Federelement mindestens zwei Rastelemente (31–36, 21, 22) mit bezogen auf den Umfangsrand des Verzahnungsflansches unterschiedlicher Länge umfasst, wobei der Abstand X der Rastspitzen der Rastelemente vom Teilungsabstand t der Zähne der Verzahnung des Verzahnungs-Flansches verschieden ist.

17. Bandkassette nach Anspruch 16 mit zwei koplanaren Flanschspulen, dadurch gekennzeichnet, dass ein gemeinsames Federelement für beide Flanschspulen, bestehend aus einem Bremskörper (9) und damit verbundenen, jeder Flanschspule (5 bzw. 6) zugeordneten zwei oder drei Rastelementen (31–35, 21, 22) vorgesehen ist.

18. Bandkassette nach Anspruch 17, dadurch gekennzeichnet, dass bei je zwei bzw. drei Rastelementen (21, 22 und 31–34) deren Abstand X durch die Beziehung

$$X_{1-2} = t\,(n + 1/2) \text{ bzw. } X_{1-3} = t\,(n + 3/4)$$

bestimmt ist, wobei t die Zahnteilung und n eine ganze Zahl (n = 0, 1, 2, 3 usw.) bedeuten.

19. Bandkassette nach einem der Ansprüche 16 bis 18, dadurch gekennzeichnet, dass das Federelement mit Betätigungsnocken (18) zum Zusammenwirken mit den kassettenseitigen Positioniervorsprüngen (12) ausgebildet ist.

20. Bandkassette nach einem oder mehreren der Ansprüche 16 bis 19, gekennzeichnet durch eine Brems- und Bandspannvorrichtung nach einem oder mehreren beliebigen Ansprüchen 1 bis 15.

**Revendications**

1. Dispositif de tension de bande et de freinage pour cassettes de bande, comportant un boîtier (1) et des bobines à bride (5 et 6) dans ce boîtier, une bride au moins portant sur son bord périphérique une denture (29) et un élément à ressort coopérant, en position de freinage, mais pas en position de relâchement, avec la denture, et un élément d'actionnement (25) côté appareil qui pénètre dans le boîtier (1) faisant passer l'élément à ressort de sa position de freinage à sa position de relâchement, et des éléments de positionnement (12) côté cassette provoquant l'amenée de chaque élément à ressort de sa position de freinage à sa position de relâchement et inversement, caractérisé par le fait que l'élément à ressort comprend au moins deux éléments à cliquet (31–35, 21, 22) de longueurs, rapportées au bord périphérique de la bride à denture, différentes, la distance (X) entre les pointes des cliquets des éléments à cliquet étant différente de la distance de pas des dents (8) et la denture (29) de la bride à denture.

2. Dispositif selon la revendication 1, caractérisé par le fait que sont prévus trois ou quatre éléments à cliquet (31–36).

3. Dispositif selon la revendication 1, caractérisé par le fait que la distance X entre les premiere et deuxième pointes de cliquet est déterminée par la relation

$$X_{1-2} = t\,(n + 1/2)$$

t representant le pas de denture et n un nombre entier (n = 0, 1, 2, 3 etc.)

4. Dispositif selon la revendication 2, caractérisé par le fait que la distance $X_{1-3}$ entre les premiere et troisième pointes de cliquet est déterminée par relation

$$X_{1-3} = t\,(n + 3/4)$$

t représentant le pas de denture et n un nombre entier (n = 0, 1, 2, 3 etc.)

5. Dispositif selon la revendication 2, caractérisé par le fait que la distance X entre les premiere et quatrième pointes de cliquet est déterminée par relation

$$X_{1-4} = t\,(n + 7/8)$$

t étant le pas de denture et n un nombre entier (n = 0, 1, 2, 3 etc.)

6. Dispositif selon les revendications 1, 2 et 4, caractérisé par un corps de freinage (9), au moins un corps élastique (20) lié au précédent comme élément à ressort et sur lequel sont ménagés au moins deux éléments à cliquet (31–36, 21, 22), de préférence élastiques.

7. Dispositif selon la revendication 6, caractérisé par le fait qu'il est prévu, comme corps de frein (9), au moins un corps de frein en forme de diapason à deux éléments à cliquet (34 et 35) de longueurs de dents de fourche différentes.

8. Dispositif selon la revendication 1, 2 et 4, caractérisé par le fait que sont prévus deux corps de frein (20) et trois éléments à cliquet (31–34) de longueurs différentes, reliés audit corps.

9. Dispositif selon les revendications 1, 2, 4 et 6, caractérisé par le fait que les éléments à cliquet (21, 22) sont réalisés, comme corps de frein (20), avec sur des tiges, des corps (18) en forme de goutte rabattus.

10. Dispositif selon la revendication 1 à 9, caractérisé par le fait que les éléments à ressort, présentent au moins un renflement (18) qui coopèrent avec des saillies du boîtier (12a et b) côté cassettes.

11. Dispositif selon la revendication 10, caractérisé par le fait que le renflement (18) est prévu entre le corps de frein (20 et les éléments à cliquet (31–35).

12. Dispositif selon la revendication 10, caractérisé par le fait que le renflement (18) est prévu directement sur les éléments à cliquet (21, 22).

13. Dispositif selon la revendication 10, caractérisé par le fait que le renflement (18) est prévu sur un bras support additionnel (36).

14. Dispositif selon les revendications 10, 11 et 13, caractérisé par le fait que les saillies du boîtier, côté cassettes, sont, en position de fonctionnement, disposées latéralement par rapport aux éléments à ressort.

15. Dispositif selon la revendication 10 et 12, caractérisé par le fait que les saillies du boîtier, côté cassettes, sont, en position de fonctionnement, disposées latéralement et entre les éléments à cliquet (31–36 et 21, 22).

16. Cassette de bande, en particulier cassette de bande magnétique, comportant un boîtier (1) et des bobines à bride (5, 6) contenues dans celui-ci et un dispositif de tension de bande et de freinage, une bride au moins portant sur son bord périphérique une denture (29) et un élément à ressort coopérant, en position de freinage, mais pas en position de relâchement, avec la denture, et un élément d'actionnement (25) côté appareil, qui pénètre dans le boîtier (1), faisant passer l'élément à ressort de sa position de freinage à sa position de relâchement et des éléments de positionnement (12) côté cassette provoquant l'amenée de chaque élément à ressort de sa position de freinage à sa position de relâchement et inversement, caractérisé par le fait que l'élément à ressort comprend au moins deux éléments à cliquet (31–35, 21, 22) de longueurs, rapportées au bord périphérique de la bride à denture, différentes, la distance (X) entre les pointes des cliquets des éléments à cliquet étant différente de la distance de pas des dents (8) de la denture (29) de la bride à denture.

17. Cassette de bande selon la revendication 16, à deux bobines à bride coplanaires, caractérisée par le fait qu'il est prévu un élément à ressort commun pour les deux bobines à bride, constitué d'un corps de frein (9) et deux ou trois éléments à cliquet (31–35, 21, 22) associés à chaque bobine à bride (5 et 6) et reliés au dit corps de frein.

18. Cassette de bande selon la revendication 17 caractérisée par le fait que, pour chacun des deux ou trois éléments à cliquet (21, 22, et 31–34) leur distance X est déterminée par la relation

$$X_{1-2} = t (n + 1/2) \text{ ou } X_{1-3} = t (n + 3/4)$$

t représentant le pas de denture et n un nombre entier (n = 0, 1, 2, 3 etc.)

19. Cassette de bande selon l'une des revendications 16 à 18 caractérisée par le fait que l'élément à ressort est muni de saillants d'actionnement (18) pour coopérer avec les saillies de positionnement (12) côté cassettes.

20. Cassette ou bande selon l'une ou plusieurs des revendications 16 à 19, caractérisée par un dispositif de tension de bande et de freinage selon l'une ou plusieurs des revendications 1 à 15.

**Claims**

1. Brake and tape tensioning means for tape cassettes having a housing (1) and flanged reels (5 and 6) contained therein, in which one or more flanges carry toothing (29) at the peripheral edge and a spring element interacts with the toothing in the braking position but not in the release position, and an actuating element (25) provided on the apparatus enters the housing (1) and transfers the spring element from its braking position to its release position and positioning elements (12) provided on the cassette guide each spring element from the braking position to the release position and vice versa, wherein the spring element comprises two or more locking elements (31–35, 21, 22) of different lengths, relative to the peripheral edge of the toothed flange, the distance X of the locking points of the locking elements not corresponding to the tooth (8) spacing t of the toothing (29) of the toothed flange.

2. Means as claimed in claim 1, wherein three or four locking elements (31–36) are provided.

3. Means as claimed in claim 1, wherein the distance X between the first and second locking points is determined by the relationship

$$X = t (n + 1/2)$$

where t is the tooth spacing and n is the integer 0, 1, 2, 3, etc.

4. Means as claimed in claim 2, wherein the distance $X_{1-3}$ between the first and third locking points is determined by the relationship

$$X_{1-3} = t (n + 3/4)$$

where t is the tooth spacing and n is the integer 0, 1, 2, 3, etc.

5. Means as claimed in claim 2, wherein the distance X between the first and fourth locking points is determined by the relationship

$$X_{1-4} = t (n + 7/8)$$

where t is the tooth spacing and n is the integer 0, 1, 2, 3, etc.

6. Means as claimed in claims 1, 2 and 4, which comprises a brake element (9), one or more spring bodies (20) connected to this as spring element, and at least two preferably springy locking elements (31–36, 21, 22) mounted on the said spring bodies.

7. Means as claimed in claim 6, wherein the brake element (9) is provided with one or more spring bodies which are in the shape of a tuning fork and possess two locking elements (34 and 35), the lengths of the fork prongs being different.

8. Means as claimed in claims 1, 2 and 4, wherein two spring bodies (20) and, connected to these, three locking elements (31–34), of different lengths are provided.

9. Means as claimed in claims 1, 2, 4 and 6, wherein the locking elements (21, 22) are constructed with inverse droplet-shaped elements (16) on stalks as spring bodies (20).

10. Means as claimed in claims 1 to 9, wherein the spring elements possess one or more broadened sections (18) which interact with projections (12a and b) provided on the cassette housing.

11. Means as claimed in claim 10, wherein the broadened section (18) is provided between the spring body (20) and the locking elements (31–35).

12. Means as claimed in claim 10, wherein the broadened section (18) is provided directly on the locking elements (21, 22).

13. Means as claimed in claim 10, wherein the broadened section (18) is provided on an additional support arm (36).

14. Means as claimed in claims 10, 11 and 13, wherein in the operating position the projections provided on the cassette housing are disposed laterally relative to the spring elements.

15. Means as claimed in claims 10 and 12, wherein in the operating position the projections provided on the cassette housing are disposed laterally and between the locking elements (31–36 and 21, 22).

16. A tape cassette, in particular a magnetic tape cassette, having a housing (1) and flanged reels (5, 6) contained therein and a brake and tape tensioning means, in which one or more flanges carry toothing (29) at the peripheral edge and a spring element interacts with the toothing in the braking position but not in the release position, and an actuating element (25) provided on the apparatus enters the housing (1) and transfers the spring element from its braking position to its release position and positioning elements (12) provided on the cassette guide each spring element from the braking position to the release position and vice versa, wherein the spring element comprises two or more locking elements (31–36, 21, 22) of different lengths, relative to the peripheral edge of the toothed flange, the distance X of the locking points of the locking elements not corresponding to the tooth spacing t of the toothing of the toothed flange.

17. A tape cassette as claimed in claim 16, having two coplanar flanged reels, wherein a common spring element is provided for both flanged reels and consists of a brake element (9) and two or three locking elements (31–35, 21, 22) connected to this and assigned to each flanged reel (5 and 6 respectively).

18. A tape cassette as claimed in claim 17, wherein, in the case of two or three locking elements (21, 22 and 31–34) each, the distance X between them is determined by the relationship

$$X_{1-2} = t \, (n + {}^1\!/_2) \text{ or } X_{1-3} = t \, (n + {}^3\!/_4)$$

where t is the tooth spacing and n is the integer 0, 1, 2, 3, etc.

19. A tape cassette as claimed in one of claims 16 to 18, wherein the spring element possesses actuating cams (18) for interaction with the said positioning projections (12).

20. A tape cassette as claimed in one or more of claims 16 to 19, incorporating a brake and tape tensioning means as claimed in one or more of any of claims 1 to 15.

1/6

# FIG.1

2/6

# FIG.2

3/6

# FIG.3

4/6

FIG.4

5/6

FIG.5

6/6

FIG.6